# EUROPEAN PATENT APPLICATION

(11) **EP 1 914 274 A1**
(43) Date of publication of application: **23.04.2008**
(21) Application number: 06780994.7
(22) Date of filing: 12.07.2006
(51) Int. Cl.: C08L 101/00, C08K 5/00, C08L 53/00

(54) **SUSTAINED-RELEASE THERMOPLASTIC POLYMER COMPOSITION AND PRODUCT COMPRISING THE SAME**

(30) Priority: 15.07.2005 JP 2005206894; 27.12.2005 JP 2005373830; 10.02.2006 JP 2006033191; 24.02.2006 JP 2006047602; 06.03.2006 JP 2006058876
(71) Applicant: SANC SALAAM CORPORATION, Asahi-ku Osaka-shi, Osaka 535-0031 (JP); Kuraray Living Co., Ltd., Osaka-shi Osaka 530-8611 (JP)
(72) Inventor: MIZUKAMI, Yoshikatsu, Sanc Salaam Corporation, Osaka-shi Osaka 535-0031 (JP); AKIBA, Eiji, Kuraray Living Co., Ltd., Osaka-shi Osaka 530-8611 (JP)
(74) Representative: Thoma, Michael
(86) International application number: PCT/JP2006/313824
(87) International publication number: WO 2007/010787

(57) **Abstract**

Problem(s)

A problem of the present invention is to provide a sustained-release polymer composition which ensures a long-term duration of the function by enabling to add to a polymer a liquid compound having a low compatibility with the polymer at a high concentration in a stable state, and sustainedly releasing the compound over a long period of time; and a product therefrom.

Means to Solve the Problems

The composition of the present invention is a composition for making a polymer to keep at a high concentration a liquid compound having a low compatibility with the polymer, which composition comprises a matrix polymer, a liquid compound, and a block copolymer having polymer units block-copolymerized in one molecule thereof, one unit having a high compatibility with the matrix polymer and the other having a high compatibility with the liquid compound, wherein these components are mixed and dispersed, and the block copolymer forms an interface by the interface action as a surfactant and encloses the liquid compound so that the composition forms a liquid-in-solid polymer emulsion. Moreover, the present invention includes a product formed from the composition.

## Description

### TECHNICAL FIELD

The present invention relates to a sustained-release polymer composition which contains a functional liquid compound and enables a long-term duration of the function by preventing rapid bleed out of the liquid matter and sustainedly releasing the organic matter, and a product formed from the composition.

### BACKGROUND ART

In production of a molded article, such as a film, a sheet, a bottle or a fiber, made from a thermoplastic polymer as a raw material, the molded article is produced by adding to the material a functional organic compound such as an antioxidant, a thermal stabilizer, an ultraviolet ray absorbing agent or an antistatic agent and so on, and forming the mixture with a method such as an extrusion molding, a blow molding or an injection molding. Moreover, a molded product has been investigated which expresses a function by containing a functional compound, e.g., an odorous substance, an insecticide, a repellant or an antibacterial compound in a molded product and sustainedly releasing the functional compound from the molded product.

However, except for a plasticizer for vinyl chloride resin or a special example (Patent Document 1) in which an ethylene-vinyl acetate copolymer is swelled and contained with a solvent at a room temperature, a content of a liquid at a room temperature is remarkably small. As a compound other than the above examples, a liquid compound content, which can be contained in a general thermoplastic polymer, is limited in a range without a practical problem. And the state of such a liquid compound is not a droplet. Moreover, since the liquid compound is forcedly confined in the polymer as a phase separation state by melt-kneading process or others, the compound has no practical use because of a large amount of bleeding it out on a surface in a short period of time. On the other hand, a matter which contains a low content of a liquid compound disappears the liquid compound in such a short period of time as several weeks at most, and lacks a long-term duration of the function.

In order to aid diffusion of a volatile component to a surface, there is an example (Patent Document 2) which adds a hydrogenated diene-series polymer to a polypropylene to sustainedly release the volatile component. However, it is the self-evident truth that a disappearent rate of the volatile component increases as a diffusion rate is larger. Therefore, the above example is contradictory and is a theoretically impracticable proposal. Moreover, in the proposal, there is no description that the volatile component stably exists in the form of a liquid in a matrix polymer, and no description about compatibility between the additive and the matrix polymer at all.

A paint (or coating) includes a powdered paint and a liquid paint. As a powder coating for a thin film having about 50 µ, there are electrostatic spraying methods such as a corona system and a tribo system. In the corona system, a powder is electrostatically attached to a coated object by applying a high voltage (30-90 KV) on a corona pin provided with a tip of a gun for spraying the powder, and charging the powder (paint) released in the electric field between the pin and the object. In the tribo system, a powder is attached to a coated object by generating electrostatic charges with the friction between an inner wall of a gun and the powder when the powder passes through the inside of the gun.
A coated object to which a powdered paint is attached is baked in a furnace at 150 to 200°C for 10 to 20 minutes so that the coating is finished. As a polymer component in the paint, thermoplastic and thermosetting polymers are used. The thermosetting polymer is often modified in an end thereof to enable combination use with a curing agent such as a urethane or epoxy curing agent.

As a powder coating method for coating a thick film, there are a fluidized bed coating method and an electrostatic spraying method. In the fluidized bed coating method a thermoplastic powdered paint is mainly used, and in an electrostatic spraying method a thermosetting powdered paint is mainly used. The fluidized bed coating method comprises suspending and floating of a powdered paint by a compressed air, and dipping of a pre-heated object to be coated in the floating paint. In this method, the floating paint is fused and adhered to the object to usually give a thick paint film by 200 to 500 µ thickness. The polymer for the thermoplastic powdered paint used in the fluidized bed coating method may include, for example, a polyvinyl chloride, a polyethylene, a polypropylene, a polyester, a nylon, and so on.

The generally used liquid paint is provided in an aqueous type and a solvent type. To such a liquid paint are blended a pigment, a dispersing agent (or dispersant), a stabilizer, a polymer, a crosslinking agent and others. The thickness of the film is 15 to 60 µ. Out of consideration to the environment, use of the aqueous type paint has increased. As the polymer to be blended, a thermoplastic or thermosetting polymer is used. For example, the polymer includes an alkyd polymer, an unsaturated polyester-series polymer, an epoxy-seriespolymer, a melamine-seriespolymer, an acrylic resin, a urethane-seriespolymer, a phenol-series polymer, a nylon-series polymer, an ester-series polymer, and a fluorocarbon resin.

The ship's bottom encrusted and fouled with extraneous matters such as a barnacle and so on increases friction with water, and is not economical in the running. For example, it has been suggested that an organic tin compound, copper oxide, mercury oxide, and others are used as an antifouling agent (Patent Documents 3 and 4). Moreover, in order to impart an antifouling property to a ship's bottom paint, an organic tin compound has been used by being mixed with the paint. However, since it has been known that an organic tin acts as an endocrine-disrupting chemical, such a compound has dropped out of use. Moreover, copper oxide and mercury oxide are also highly toxic compounds. On the other hand, many self polishing-type ship's bottom paints are commercially available. In these paints, it is considered that a fresh layer of the paint is constantly exposed by peeling off of the paint in the surface layer due to hydrolysis of the paint polymer, and decrease in the thickness of the paint film. However, since the ship's bottom is encrusted with the fouling matter until the surface layer peels off, it is inevitable that the effect of the paint is limited.

A highly safe antifouling agent may include an essential oil. The essential oil has been also used as a food additive over the years before Christ. However, the essential oil has intractability due to volatility. As a method for mixing a polymer and a volatile compound, there is a method which comprises allowing a porous powder such as a rubber component or a zeolite to contain a volatile component in advance, and mixing the resulting matter and the polymer temporarily. However, in such a method, although the polymer was temporarily allowed to contain the volatile component at a high concentration, it was difficult to sustainedly release the volatile component over a long period of time because of fast diffusion (or spread) of the volatile component. Further, the method had a shortcoming of increasing the diffusion rate as the surface area increases. Therefore, in a paint application for coating a large surface area with a thin film, the diffusion of the volatile component was fast.

Moreover, as an example for using a polymer having thermoplasticity in spite of containing water, there has been proposed a method which comprises mixing and allowing an inorganicsubstance(e.g.,magnesium hydroxide,aluminum hydroxide and calcium silicate) to contain in the polymer, wherein the inorganic substance is in the form of a hydrate state (or has crystallization water) (Patent Document 5). However, since the crystallization water of the inorganic substance is released at a temperature as relatively high as 300 to 550°C, the method is disadvantageous in that the crystallization water does not act at a low temperature. It is impossible to allow the crystallization water to contain a solute therein.

Further, as a filter used for the purpose of dust collection, there is used a fabric such as a textile (a woven or knitted cloth) or a nonwoven fabric, a three-dimensionally assembled fiber structure, and others. The filter is considered to have higher performance as the filter has lower pressure loss and higher dust collection efficiency. In general, improvement of dust collection efficiency can be achieved to some extent by increasing a fiber density in the fabric or fiber structure, while the high fiber density results in a lower air permeability. Therefore, in order to ensure the air permeability in excess of a certain level to function as a filter, the dust collection efficiency is restricted.

In order to improve the dust collection efficiency while ensuring the air permeability in excess of a certain level, it is effective that the diameter of the fiber constituting the filter is small, and various filters using an ultra-fine fiber have been proposed. Moreover, it is also utilized to collect dust by electrostatic force. There has been utilized a meltblown nonwoven fabric made from an ultra-fine fiber, which is subjected to electreting for collecting dust through electrostatic induction by electrizing a filter itself. However, this electreting tends to neutralize the effect after exposure under a high temperature not lower than 50°C or after a long time. Therefore, the filter had a propensity to be lack of washing resistance and durability.

Moreover, a method of collecting dust by a scrubber for water sprinkling has been also generally used. For example, a method for collecting dust by combination of a bag filter and a scrubber has been adopted for an incinerator flue gas. In a fine particle having a particle size of not larger than several micrometers, generally, a liquid bridging force is more dominant than an electrostatic force for the adherence of the fine particles. Thus, the scrubber utilizes effective collection of the fine particle due to the liquid bridging force of water.

As an example that the liquid bridging force is utilized for a filter itself, there is utilized a filter improved in a dust collection efficiency thereof, which comprises a fiber structure impregnated with a low-volatile oil component, wherein the fiber structure comprises staple fibers entangled by needle punch or others. However, the filter is limited to such a loose clearance one having a high air permeability that the oil component to be impregnated does not inhibit the air permeability.

Moreover, a fabric for a clean room wear has been proposed which comprises a fiber made from a polymer having a hydrous inorganic compound kneaded therein and has an improved dust collection efficiency with maintaining a relatively high air permeability by slightly coating the surface of the fiber with water (Patent Document 6). However, the high dust collection efficiency is limited to the case of an air flow rate as low as 0.09 cm/second. Therefore, in the case of a commonly used air filter having an air flow rate of 5 to 8 cm/second, an excellent dust collection efficiency cannot be expressed.
Patent Document 1: Japanese Patent Application Laid-Open No. 12654/1983 (JP-58-12654A)
Patent Document 2: Japanese Patent Application Laid-Open No. 87920/1998 (JP-10-87920A)
Patent Document 3: Japanese Patent Application Laid-Open No. 53924/1974 (JP-49-53924A)
Patent Document 4: Japanese Patent Application Laid-Open No. 92178/1974 (JP-49-92178A)
Patent Document 5: Japanese Patent Application Laid-Open No. 316031/1994 (JP-06-316031A)
Patent Document 6: Japanese Patent Application Laid-Open No. 137700/2003 (JP-2003-137700A)

### DISCLOSURE OF THE INVENTION

### PROBLEMS TO BE SOLVED BY THE INVENTION

In mixing a polymer and a liquid compound having a low compatibility with the polymer, a large amount of the liquid compound bleeds out from a surface of a product thereof. Therefore, it is practically difficult to mix the polymer and the liquid compound. Moreover, in the case where a large amount of the liquid compound having the low compatibility bleeds out in a short period of time, the duration of the effect is insufficient. A problem of the invention is to provide a sustained-release polymer composition which ensures a long-term duration of the function by enabling to add to a polymer a liquid compound having a low compatibility with the polymer at a high concentration in a stable state, and sustainedly releasing the compound over a long period of time; and a product therefrom.

### MEANS TO SOLVE THE PROBLEMS

The present invention includes a composition for making a polymer to keep (or hold) at a high concentration a liquid compound having a low compatibility with the polymer, which composition comprises a matrix polymer, a liquid compound, and a block copolymer having polymer units block-copolymerized in one molecule thereof, one unit having a high compatibility with the matrix polymer and the other having a high compatibility with the liquid compound, wherein these components are mixed and dispersed, and the block copolymer has an interface action as a surfactant and encloses the liquid compound so that the composition forms an emulsion. We newly named the composition of the present invention as a liquid-in-solid polymer emulsion.
That is, the composition of the present invention is a composition which is forming of a liquid-in-solid polymer emulsion (a polymer emulsion containing a liquid dispersed in a solid) and comprises
(A) a thermoplastic polymer,
(B) a block copolymer comprising (B1) a block and (B2) a block, and
(C) a liquid compound,
wherein the block (B1) has a high compatibility with the polymer (A), the block (B2) has a low compatibility with the polymer (A), and the block copolymer (B) is phase-separated from the polymer (A),
the amount of the copolymer (B) is 0.1 to 50 parts by weight relative to 100 parts by weight of the polymer (A),
the liquid compound (C) has a low compatibility with each of the block (B1) and the polymer (A) and a high compatibility with the block (B2), is phase-separated from the polymer (A), and is in a liquid phase at a temperature not higher than 100°C,
the liquid compound (C) is dispersed and mixed in an amount of 0.1 to 20 parts by weight relative to 100 parts by weight of the total amount of the polymer (A) and the block copolymer (B), and
the copolymer (B) has an interface action as a surfactant and encloses the liquid compound (C) forming of a liquid-in-solid polymer emulsion.

### EFFECTS OF THE INVENTION

The present invention refers to a sustained-release thermoplastic polymer composition which contains a liquid compound at a temperature not higher than 100°C, inhibits rapid bleeding out of the organic matter to sustainedly releases the organic matter, and as a result, enables a long-term duration of the function of the liquid compound; and to a product therefrom.
The composition of the present invention is used as a raw material, for example, for a fiber, a fabric or product made from the fiber, a coating material (or agent), a covering material (or agent), an extrusion-molded article such as a pipe, a sheet, a film and a laminated product, an injection-molded article, a rotational-molded article and a paint. By containing in the composition of the present invention an agent such as a liquid of pharmaceutical product, an antibacterial agent, an antifungal agent, an antiviral agent, an antielectrostatic agent, an antialgal agent, a preservative, an aromatic agent, an anti-insect agent, an insecticide, an anti-rodent agent, an anti-bird agent, an anti-animal agent, an attractant, a pesticide, an anti-fouling agent, a flame retardant, a dust-capturing agent, a fertilizer or a deodorant agent (deodorizing agent), each function of the agent contained can be maintained over several years. Moreover, an ultra-thin liquid film by less than 1 µm thickness can be formed on the surface of the subjects, and the composition is used as a highly functional filter having a fabric or textile product and a laminated product as a main dust-capturing material.

### BEST MODE FOR CARRYING OUT THE INVENTION

The composition of the present invention is a composition (D) which is forming of a liquid-in-solid polymer emulsion at an atmospheric (or room) temperature, and comprises
(A) a thermoplastic polymer,
(B) a block copolymer comprising (B1) a block and (B2) a block, and
(C) a liquid compound,
wherein the block (B1) has a high compatibility with the polymer (A) and a low compatibility with the liquid compound (C), the block (B2) has a high compatibility with the liquid compound (C) and a low compatibility with the polymer (A), and the block copolymer (B) is phase-separated from the polymer (A),
the amount of the copolymer (B) is 0.1 to 50 parts by weight relative to 100 parts by weight of the polymer (A),
the liquid compound (C) has a low compatibility with each of the block (B1) and the polymer (A) and a high compatibility with the block (B2), is phase-separated from the polymer (A), and is a liquid phase at a temperature not higher than 100°C,
the liquid compound (C) is dispersed and mixed in an amount of 0.1 to 20 parts by weight relative to 100 parts by weight of the total amount of the polymer (A) and the block copolymer (B), and
wherein the copolymer (B) has an interface action as a surfactant and encloses the liquid compound (C).

Moreover, the composition (F) of the present invention is a composition comprising:
a polymer blend in which the composition (D) forming of a liquid-in-solid polymer emulsion is further dispersed in a polymer composition (E) comprising a polymer other than the polymer (A) (hereinafter, sometimes referred to as other polymer), or a blend of other polymer and a plasticizer,
a polymer solution of the composition (D), or
a blended of a polymer and a plasticizer.

Further, in the composition (G) of the present invention, the polymer other than the polymer (A) (other polymer) comprises a thermoplastic polymer, or/and a thermosetting polymer precursor or thermosetting polymer, or the polymer composition (E) comprises a composition comprising a blended matter of a plasticizer, and a thermoplastic polymer, or/and a thermosetting polymer precursor or thermosetting polymer.

Furthermore, the composition (D4) of the present invention comprises the composition (D) or (F) or (G), in which the liquid compound (C) which is in a liquid phase at a temperature not higher than 100°C comprises an organic compound, or a solution of an organic compound, or an aqueous solution.

Moreover, the composition (D5) of the present invention comprises the composition (D) or (F) or (G), in which the thermoplastic polymer (A) comprises a polyolefin-series polymer, and the block copolymer (B) comprises at least one member selected from the group consisting of
a poly(ethylene/propylene) (B1)-polystylene (B2) block copolymer(SEP)in which the poly(ethylene/propylene) (B1) comprises a block having a high compatibility with the polymer (A) and the polystyrene (B2) comprises a block having a high compatibility with the liquid compound (C),
a polystyrene (B2)-poly(ethylene/butylene) (B1) block copolymer (SEB),
a polystyrene (B2)-poly(ethylene/propylene) (B1)-polystyrene (B2) block copolymer (SEPS),
a polystyrene (B2)-poly(ethylene/butylene) (B1)-polystyrene (B2) block copolymer (SEBS), and
a polystyrene (B2)-poly(ethylene-ethylene/propylene) (B1)-polystyrene (B2) block copolymer (SEEPS).

Further, the composition (D6) of the present invention comprises the composition (D) or (F) or (G), in which the liquid compound (C) comprises an organic compound or solution which has an aromatic ring, an alicyclic skeleton or a polar group having a higher compatibility with a polystyrene than a compatibility with a polyolefin.

Furthermore, the composition (D7) of the present invention comprises the (D) or (F) or (G), in which the thermoplastic polymer (A) comprises a polystyrene-series polymer, and the block copolymer (B) comprises at least one member selected from the group consisting of
a poly(ethylene/propylene) (B1)-polystyrene (B1) block copolymer (SEP) in which the poly(ethylene/propylene) (B1) comprises a block having a high compatibility with the polymer (A) and the polystyrene (B1) comprises a block having a high compatibility with the liquid compound (C),
a polystyrene (B1)-poly(ethylene/butylene) (B1) block copolymer (SEB),
a polystyrene (B1)-poly(ethylene/propylene) (B1)-polystyrene (B1) block copolymer (SEPS),
a polystyrene (B1)-poly(ethylene/butylene) (B1)-polystyrene (B1) block copolymer (SEBS), and
a polystyrene (B1)-poly(ethylene-ethylene/propylene) (B1)-polystyrene (B1) block copolymer (SEEPS).

Moreover, the composition (D8) of the present invention comprises the composition (D4) in which the liquid compound (C) comprises an organic compound or solution, wherein the organic compound or solution has a higher compatibility with a polyolefin than a compatibility with a polystyrene, and contains a compound or solution having a low compatibility with the polystyrene, such as an alkyl or alkenyl-containing compound, an ester or ether or polyether amine or an alcohol containing an alkyl or alkenyl group.

Further, the composition (D9) of the present invention comprises the composition (D) or (F) or (G), wherein the block copolymer (B) comprises a hydrophilic block copolymer, the block (B1) comprises a hydrophobic polyvinyl compound, and the block (B2) comprises a vinyl polymer of a dicarboxylic anhydride such as maleic anhydride, fumaric anhydride or itaconic anhydride, or/and a polyol such as a polyethylene glycol or polypropylene glycol.

Furthermore, the composition (D10) of the present invention comprises the composition (D) or (F) or (G), in which the liquid compound (C) comprises at least one member selected from the group consisting of a pharmaceutical product, an antibacterial agent, an antifungal agent, an antiviral agent, an antielectrostatic agent, an antialgal agent, a preservative, an aromatic agent, an anti-insect agent, an insecticide, an anti-rodent agent, an anti-bird agent, an anti-animal agent, an attractant, a pesticide, an anti-fouling agent, a flame retardant, a dust-capturing agent, a fertilizer and a deodorant agent.

Moreover, the molded article of the present invention is formed from the composition (D), (F), (G) or (D4) to (D10), or a diluted matter thereof, and has a thin film on a surface thereof, and the thin film is formed from a liquid bled out from an inside thereof and has a thickness of not more than 1 µm and is in the phase of a liquid at a temperature not higher than 100°C.

Further, the molded article of the present invention is an extrusion-molded article formed from the composition (D), (F), (G) or (D4) to (D10), and the molded article is a fiber, a fabric or textile product made from the fiber, and a laminated product comprising the fabric or textile product.

Furthermore, the molded article of the present invention is an extrusion-molded article formed from the composition (D), (F), (G) or (D4) to (D10), and is a coating material, a covering material, a pipe, a sheet, a film, and a laminated molded article. Moreover, the molded article of the present invention is an injection- or rotational-molded article formed from the composition (D), (F), (G) or (D4) to (D10). Similarly, the molded article of the present invention is a blow-molded article.

Moreover, the paint of the present invention is a paint formed from the composition (D), (F), (G) or (D4) to (D10), or a diluted matter thereof.
The filter of the present invention is a filter comprising a fabric or product made from the fiber and a laminated product as a main dust-capturing material.

In the present invention, the thermoplastic polymer (A) may be a polymeric or elastomeric one as far as the thermoplastic polymer (A) can be molded into a film, a sheet, a fiber, an injection-molded article, and others. The thermoplastic polymer (A) may include a thermoplastic polymer such as a polyester-series polymer, a polyamide-series polymer, a polyacrylic-series polymer, a polyurethane-series polymer, a polystyrene-series polymer or a polycarbonate-series polymer, and a thermosetting polymer such as a phenol-series polymer, an unsaturated polyester-series polymer, a melamine-series polymer, an epoxy-series polymer, a urea-series polymer or an alkyd-series polymer. Among them, the thermoplastic polymer (A) includes a polyolefin-series polymer which is considered to be difficult to add a liquid organic compound at a high concentration thereto. As concrete examples of the polyolefin-series polymer, there is mentioned a homopolymer such as a polyethylene, a polypropylene, a polystyrene, a polyacrylate, a polymethacrylate, a poly(1-butene), a poly(1-pentene) or a polymethylpentene, their copolymers and others. Among them, the polyolefin-series polymer is preferred due to a low melting point and a low reactivity. In the case of a polymer having a high melting point, the loss becomes large in molding due to large estrangement between the melting point and a boiling point of a liquid compound to be added. For example, it is necessary to use a special quenching system such as an underwater cutter.

In the present invention, the block copolymer (B) is phase-separated from matrix polymer (A), is metastably dispersed in the matrix polymer (A), and forms an interface between the matrix polymer (A) and the liquid compound (C). The block copolymer (B) is a block copolymer which comprises at least two polymer units containing (B1) a block having a high compatibility with the polymer (A) and a low compatibility with the liquid compound (C) and (B2) a block having a high compatibility with the liquid compound (C) and a low compatibility with the polymer (A). In the present invention, it is important to select combination of the matrix polymer (A), the liquid compound (C) and the block copolymer (B) for forming a stable liquid-in-solid polymer emulsion. The content of the block copolymer (B) is 0.1 to 50 parts by weight relative to 100 parts by weight of the matrix polymer (A). In the case where the content of the block copolymer (B) is less than 0.1 part by weight, the absolute quantity of the liquid compound (C) contained in the liquid-in-solid polymer emulsion is small. As a result, it is impossible to impart a sufficient function to a product. In the case where the block copolymer (B) is over 50 parts by weight, the amount of the copolymer (B) and liquid compound (C) is larger than the matrix polymer (A). Thus, the desired liquid-in-solid polymer emulsion cannot be obtained. The content of the block copolymer (B) is preferably 0.2 to 30 parts by weight. The liquid compound (C) and the block copolymer (B) are blended by correlating these contents with each other.
The composition of the present invention is also used as a master batch. Depending on dilution ratio, the composition preferably contains 4 to 25 parts by weight of the block copolymer (B) relative to 100 parts by weight of the matrix polymer (A). Moreover, the molded article of the present invention is formed by diluting the master batch in many cases. The molded article preferably contains 0.2 to 2.5 parts by weight of the block copolymer (B) relative to 100 parts by weight of the matrix polymer (A).

In the case where the matrix polymer (A) is a polyolefin, the block copolymer (B) is preferably a block copolymer partially having (B1) a polyolefin unit in terms of an excellent compatibility. Further, the block copolymer (B) having (B2) a polystyrene is excellent in compatibility with an aromatic or alicyclic compound as the liquid compound (C). For example , the block copolymer (B) is more preferably at least one member selected from the group consisting of a polystyrene-poly(ethylene/propylene) block copolymer (SEP), a polystyrene-poly(ethylene/butylene) block copolymer (SEB), a polystyrene-poly(ethylene/propylene)- polystyrene block copolymer (SEPS), a polystyrene-poly(ethylene/butylene)-polystyrene block copolymer (SEBS) and a polystyrene-poly(ethylene-ethylene/propylene)-polystyrene block copolymer (SEEPS).

In the case where the liquid compound (C) is an aqueous solution and the matrix polymer (A) is a polyolefin, the block copolymer (B) is more preferably a block copolymer partially having (B1) a polyolefin unit. The block copolymer (B) is further preferably a block copolymer of (B1) a block having compatibility with the polymer (A) and (B2) a block having hydrophilicity. For example, the block copolymer (B) is preferably a hydrophilic block copolymer in which the block (B1) comprises a hydrophobic polyvinyl compound and the block (B2) comprises a vinyl polymer of a dicarboxylic anhydride such as maleic anhydride, fumaric anhydride or itaconic anhydride, a polyol such as a polyethylene glycol or a polypropylene glycol, and others. The polyvinyl compound as the block (B1) may include, for example, a polyethylene, a polypropylene, a polyacrylonitrile, apolymethacrylonitrile, a poly(methyl acrylate), a polybutene and a polydiisobutene. The block copolymer (B) may be easily produced by a consecutive cation living polymerization or other means to the block (B1) with a vinyl dicarboxylate such as maleic anhydride constituting the block (B2) in accordance with a conventional method. The dicarboxylic anhydride is allowed to react with water or an aqueous solution to form a carboxylic acid.
Moreover, in accordance with a conventional method, the block copolymer (B) may be obtained by melt-mixing of a polyalkyl ester such as a polylactic acid (B1) and a polyethylene glycol (B2), and kneading the mixture under a reduced pressure. Further, the polyolefin (B1)-polyethylene glycol (B2) block copolymer (B) may be obtained by a conventional method which comprises an addition polymerizing ethylene oxide to (B1) a polyolefin having a dibutene introduced in an end thereof.

The molten block copolymer (B) is phase-separated in the molten matrix (A), and is metastably dispersed because of a high compatibility with the matrix (A) of the block (B1). The copolymer (B) shows a surfactant-like behavior, and forms an interface to give a liquid-in-solid polymer emulsion in which the liquid compound (C) having a low compatibility with the polymer (A) is enclosed in the copolymer (B). The emulsion is formed by a membrane of the copolymer (B), and the membrane has an arrangement in that the outside of the membrane comprises the block (B1) having a high compatibility with the polymer (A) and the inside thereof comprises the block (B2) having a high compatibility with the liquid compound (C). The liquid compound (C) is stably maintained (or kept) in a liquid phase in large quantity by formation of the liquid-in-solid polymer emulsion.
The state of the liquid-in-solid polymer emulsion is stably maintained after solidification of the composition, and is stably formed again even after melting and shearing again in a closed system. The liquid compound (C) is in the form that is surrounded by the dense membrane (B) and has a small permeability rate. Moreover, the liquid compound (C) is locally stored and is excellent in a sustained release effect.

In the present invention, it should be a select for a composition among the above (A), (B) and the compound (C) which is a liquid phase at a temperature not higher than 100°C as an effective ingredient, is phase-separated from the thermoplastic polymer (A) due to a low compatibility with the polymer (A) and a high compatibility with the block (B2) in the block copolymer (B) so that it forms a stable liquid-in-solid polymer emulsion. The liquid compound (C) may be an organic liquid or an aqueous solution. The liquid compound (C) is preferably in a liquid phase at a temperature not higher than 100°C, particularly at a room temperature, because of easy selection of a suitable diffusion rate in the effective ingredient. An organic compound being in a solid phase at a temperature not higher than 100°C or an infusible compound (e.g., an inorganic compound) may be dissolved in a solvent to prepare an organic solution or aqueous solution, and such a solution may be used in the present invention. Moreover, a low partial pressure and a small evaporaizing rate are ensured by preparing an organic solution from an organic compound having a low boiling point.

In the present invention, the organic compound (C), which is a liquid phase at a temperature not higher than 100°C, may include a natural essential oil, for example, terpenes, as a conifer essential oil such as a cedarwood oil containing a large quantity of thuyopsene and being excellent in anti-insect and anti-mite properties, a peppermint oil containing a large quantity of menthol and being excellent in an anti-rodent property, an eucalyptus oil being excellent in antibacterial and antiviral properties and having bronchodilatation, a lemongrass oil being excellent in an antifungal property, a lavender oil being excellent in an aromatic property and others. Moreover, the compound may include as follows: for example, a pyrethroid-series insecticide or herbicide compound such as permethrin as an organic compound having a pesticidal function; an amino acid-containing organic matter having a low molecular weight as an organic compound having a fertilizer function; an animal-attracting hormone of animals or plants as an organic compound having an attraction function; capsaicin or limonene which is avoided by an animal as an organic compound having a repellent function; triclosan as an organic compound having a bactericidal function; an isothiazoline-series compound as an organic compound having an anti-fungal function; zinc pyrithione as an organic compound having an antibacterial function; a paraben or EDTA as a preservative; a stearyl polyether monoglyceride, a stearyl polyether diglyceride or a stearyl aminopolyether as an antistatic agent; and others.

The compound (C) being in a liquid phase at a temperature not higher than 100°C may be an aqueous solution, and may be, for example, an aqueous solution of a water-soluble phosphoric acid, sulfuric acid, hydrochloric acid compound, or salt thereof. The representative examples of solutions include various surfactants such as betaine.
Moreover, in the aqueous solution (C) used in the present invention, a water-soluble inorganic matter or/and organic matter is dissolved. Moreover, the aqueous solution may be an emulsified aqueous solution. Further, the aqueous solution may be an aqueous solution in which other solute is further dissolved in a mixed solution such as water-alcohol. In the case where the water or aqueous solution contained in the thermoplastic polymer is heated to a high temperature, the resulting steam coats the surface of the thermoplastic polymer to cut off oxygen and absorb the latent heat of evaporation. As a result, flame retardancy is imparted to the product.

In the case where a solute having an antistatic effect (e.g., a surfactant) is dissolved in an aqueous solution, a durable antistatic effect is imparted by sustainedly releasing the surfactant and diffusing the surfactant to the surface of the thermoplastic polymer. The surfactant may include, for example, an anionic surfactant such as a soap, a salt of a sulfuric acid ester, a salt of a sulfonic acid, a salt of a phosphoric acid ester or a salt of a dithiophosphoric acid ester, a cationic surfactant such as an amine salt type or a quaternary ammonium salt type, an ampholytic surfactant such as an amino acid type or a betaine type, a nonionic surfactant such as a polyethylene glycol type, a polypropylene glycol type, a Pluronic type or a polyhydric alcohol type, and others.

The surfactant also has an action as a cleaning agent, and can impart a sustained soil release effect other than an antistatic effect to the thermoplastic polymer. Moreover, the surfactant can impart long-acting hydrophilicity to the surface of the thermoplastic polymer. Further, the surfactant changes the coefficient of friction of the thermoplastic polymer, and imparts long-acting smoothness and long-acting brakeage.

Moreover, the cationic surfactant has a property acting on a protein, and has an antibacterial action and a bactericidal (sterilization) action. For example, lauryldimethylbenzyl ammonium chloride is a most popular cationic bactericide, and has a bactericidal performance several ten times as large as phenol. The quaternary ammonium salt is used as a mild bactericide. Further, in addition to the surfactant, a water-soluble bactericide, for example, an aqueous solution such as phenol or acroline can be also used as a bactericide. As an extreme application, it is possible to use an aqueous solution of glutaraldehyde. However, a strict care should be exercised in handling the solution because the solution is remarkably highly toxic. Moreover, a bactericidal aqueous solution of an inorganic salt such as silver nitrate or copper sulfate also can be used because of a strong bactericidal action thereof. Some of these bactericides are also effective as a fungicide.

Since the aqueous solution used in the present invention may be a mixed aqueous solution further containing a solute dissolved in an emulsified aqueous solution or an water-alcohol solution, for example, a water-glycerin aqueous solution, a water-polyvinyl alcohol aqueous solution or a sucrose water, the solute may be, for example, a lipid such as various flavor matters which is dissolved in such a mixed solution or is stably dispersed therein. As various flavor matters , there maybe also used an essential oil such as a Cedarwood oil, an Eucalyptus oil, a Peppermint oil, a Capsaicin, a Rose oil, a Lavender oil or a Lemon grass oil, a food flavor, a perfume, and others. Such flavor matters can appropriately impart an aromatherapy effect, a favorite flavor effect, a marking effect, and others.

The sustained release property and sustained release period of the functional liquid compound (C) can be controlled depending on the mixed state, how a liquid-in-solid polymer emulsion to be formed in accordance with the amount of the liquid compound (C), the compatibility with each of the matrix polymer (A) and the block copolymer (B), their amounts, its interfacial property thereof, and the ratio of the copolymer (B) and the liquid compound (C).
Moreover, to the polymer composition of the present invention may be added other additive(s) in a range that the composition does not deviate from objects of the present invention. The additive may include an inorganic filler, a pigment, a lubricant, a stabilizer, and others.

As a means for mixing the polymer composition of the present invention, a single extruder or a twin extruder having a superior kneading effect to the single extruder may be employed as far as which is a general melt-kneading means and is equipped with a liquid-feeding device. If necessary, a roller kneading, a kneader kneading, or the like is appropriately selected. Such a means may be also directly adopted for a general molding having such a mechanism, e.g., an extrusion molding, a blow molding, an injection molding, and a rotational molding.
Since the composition of the present invention is in the form of a finely dispersed emulsion, the expansion energy per one emulsion droplet is very small even when the liquid compound enclosed in the emulsion droplet may be heated up to a temperature not lower than a boiling point thereof. Therefore, even in a high temperature at which the liquid compound is in a polymer molten phase, the expansion is restricted by the melt viscosity of the matrix thermoplastic polymer, and the liquid compound maintains the liquid or mixed state thereof. Also in such a system, a temperature not lower than a boiling point of water or the aqueous solution at an atmospheric pressure, the emulsion droplet maintains a small volume which is slightly expanded compared with a volume in a pressurized state by setting reasonable conditions of temperature and viscosity. Then, when the system is cooled to a temperature not higher than the boiling point at an atmospheric pressure, the volume of the droplet becomes small and the system is shifted from a pressurized state to an atmospheric pressure state. As a result, the droplet becomes completely a liquid phase. More specifically, as shown in Examples, it is possible to conduct extrusion processing by involving the liquid compound (C) in an emulsion state in the thermoplastic polymer or the like at a process temperature not lower than the boiling point of the liquid compound (C) at an atmospheric pressure.

Moreover, the polymer composition of the present invention can be used as a master batch, or can be used by diluting the composition with other matrix polymer (E). For example, in the case of the liquid compound (C) having a low boiling point, a finished product may be produced by using a matrix polymer (A) processible at a low melting point such as LDPE to give the polymer composition of the present invention as a master batch, and diluting the master batch with a PP having a higher melting point. In this case, a liquid-in-solid polymer emulsion composition (F) having a double capsule structure is formed as follows: island(s) of the LDPE (A) is (are) formed in the PP (E), and in the island(s) the liquid compound (C) is (are) enclosed with the copolymer (B) so that the liquid-in-solid polymer emulsion composition (D) is formed, and the composition (D) is finely dispersed in the polymer (E). If necessary, it is also preferred to mix a compatibilizer suitable to improve the strength of the stability of the emulsion by stably blending and finely blending of the matrix polymer (D) and the matrix polymer (E).

Other matrix polymer (E) used for dilution in the present invention can be widely selected in a range that a stable production is ensured. In addition to the above-mentioned similar two kinds of polyolefins, for example, there is mentioned a liquid-in-solid polymer emulsion (F) having a double structure, in which an island of the LDPE (D) is formed in the PET (E), and in the island the liquid compound (C) enclosed with the copolymer (B) is contained; and a liquid-in-solid polymer emulsion(F) having a double structure, in which an island of the LDPE (D) is formed in the PVC (E), and in the island the liquid compound (C) enclosed with the copolymer (B) is contained.
It is difficult to give a polymer composition which comprises an aromatic polymer (e.g., a PET, a polystyrene) or a polymer using an aromatic plasticizer (e.g., a PVC) as the matrix polymer (A) of the polymer composition (D), and an aromatic liquid organic compound (C) contained in the matrix polymer, and which forms a liquid-in-solid polymer emulsion, because the compatibility between the matrix (A) and the liquid compound (C) is good. However, the desired object of the present invention can be achieved by blending the polymer composition (D) in which the liquid-in-solid polymer emulsion comprising the aromatic liquid organic compound (C) dispersed in the polyolefin (A) as the matrix polymer is formed, and the aromatic polymer (E) (e.g., a PET, a polystyrene) orapolymerusinganaromatic plasticizer (e.g., a polyvinyl chloride) as a new matrix polymer (E) to form a double liquid-in-solid polymer emulsion.

Other matrix polymer (E) may be a polymer precursor. For example, a thermosetting liquid-in-solid polymer emulsion (F) having a double structure is formed which comprises a thermosetting novolak polyphenol resin precursor (E), and the liquid-in-solid polymer emulsion (D) contained in the novolak precursor (E), wherein the polymer emulsion (D) comprises the liquid compound (C) enclosed with the copolymer (B).
The thermosetting resin to be used includes a phenol resin, a xylene resin, a urea resin, an epoxy resin, a melamine-urea resin, and others.

Other matrix polymer (E) may be temporarily a polymer solution. For example, a liquid-in-solid polymer emulsion (F) having a double structure is formed which comprises a polyurethane (D) liquid-in-solid polymer emulsion contained in a polyacrylonitrile DMFsolution(E).
Moreover, in the case of using a biodegradable polymer as the matrix polymer (A), the block copolymer (B) and other polymer (E), biodegradability is imparted to the polymer composition of the present invention and the product therefrom. Such a composition and product are suitable for providing method of a long-acting pesticide or fertilizer.

The fiber of the present invention is obtained by extrusion molding the melt-spun composition of the present invention, and includes a staple, a filament, a tape yarn and a short cut fiber. Moreover, the fiber of the present invention is used to give the thermal bonding nonwoven fabric and multilayer laminate of the present invention, wherein the nonwoven fabric and multilayer laminate may be a meltblown, spunbonded, needle punched, dry, wet, chemical bonded one. Further, the fabric of the present invention includes a fabric produced by blend spinning, combining filament, yarn doubling, union weaving or union knitting the fiber of the present invention.

The fiber of the present invention may be used as an insulator of bedclothes such as a mattress or a pillow, a toy such as a doll, an interior textile product such as a curtain or a chair cover, and an anti-insect, anti-mite or insecticidal textile product such as a mosquito net, a screen door or clothes.

The molded article of the present invention is a molded article produced by molding the composition of the present invention with the use of a common production method such as an injection molding, a blow molding, an extrusion molding or a rotational molding, and includes, for example, a container; a film produced by a common inflation method or T-die method; a sheet produced by a T-die method; a tank produced by a rotational molding; a coating material, a wire covering material, a laminate or a hose produced by an extrusion molding; and others.

The paint of the present invention includes a powdered paint comprising a fine particle obtained by freeze crushing the composition (D) of the present invention, a paint containing the powdered fine particle, and a paint containing the powdered fine particle dissolved or dispersed in a solvent. The matrix polymer (D) or/and other polymer (E) is/are preferably dissolved in the solvent or dispersion medium so that the paint maintains a reasonable viscosity.

The powdered paint is produced by mixing a pigment and if necessary an additive such as a surface control agent, a plasticizer, an ultraviolet ray absorbing agent, an antioxidant, an anti-popping agent, a static control agent, a curing catalyst, an antiblocking agent or a flow control agent to give a pellet, and pulverizing the pellet. The preferred pulverizing method includes a freeze mill or hammer pulverization utilizing a liquid nitrogen, and by such a method, a powder having a mean particle size of not more than 100 µ is obtained. The painting method may be the above-mentioned common method. The pigment may include, for example, iron oxide, lead oxide, carbon black, titanium dioxide, talc, sulfated barium, cadmium yellow, cadmium red, chrome yellow, aluminum flake, and copper phthalocyanine blue. The pigment is not limited to one mentioned above. Among these pigments, not less than two pigments may be used in combination. The blending amount of the pigment is preferably from 0.5 to 40wt%.

The liquid paint of the present invention is produced by suitably blending and mixing the powder of the present invention in the same manner as the pigment. In particular, it is advantageously preferred as a ship's bottom paint to have a large film thickness and a slight roughness on the surface of the paint film because the water disturbance can become small. The ship's bottom paint of the present invention containing Capsaicin or Cedarwood Virginia oil is effective for inhibiting growth of a fouling such as barnacle. Either component is a food additive, and a safe and eco-friendly component.

Moreover, the liquid paint composition of the present invention is produced by heat-mixed the paint (D) of the present invention in a solvent (E) of a paint such as toluene, xylene or n-hexane under a high pressure for finely dispersing the paint in the solvent in a molten state, and mixing the resulting matter with a thermosetting resin solution to a predetermined concentration to give a liquid paint composition having an above mentioned function for use as a general paint. In the case of comparing a conventional method using a microcapsule, a finer and more stable soft capsule is provided at a low price.

The filter of the present invention comprises the fiber structure of the present invention having a fiber surface coated with a liquid compound so that the liquid compound forms a thin film having a thickness of not more than 1 µm, and demonstrates a high degree of a fine dust collection efficiency by a liquid bridging force of the liquid compound. Dust is collected on the surface of the thin film by a strong adherence due to the liquid bridging force of the liquid compound. In the case of using the fiber structure as a filter, the structure exerts several tens times higher degree of the dust collection efficiency than a conventional filter while having the high air permeability and the low pressure drop. Moreover, in the case of using the fiber structure as a wiping cloth, the structure exerts a performance for efficiently wiping off fine dust.
As a method for forming a thin film of the liquid organic compound on the surface of the fiber, there is a method which comprises providing a solution of the organic compound dissolved in a high-volatile solvent, impregnating a fiber structure with the solution, and then volatilizing the solvent to leave the compound on the surface of the fiber. However, the method requires a great deal of expenses, and needs a complicated process such as the use of an apparatus for recovering a high-volatile solvent. Therefore, the method is not adequate to a practical industrial production.
Moreover, in the case of such an finish-processing, the thin film of the liquid is removed once the fiber is washed, as a result, the effect of the liquid is lost. On the other hand, in the product of the present invention, a fresh liquid organic compound bleeds out from the inside thereof even after washing to form a thin film, and the function of the liquid is recovered.

### EXAMPLES

Hereinafter, the following examples are intended to describe this invention in further detail and should by no means be interpreted as defining the scope of the invention.

### (1) Measurements of weight and GC

A molded article was put in a hot air dryer at 60°C or 80°C, and the weight was measured with time, and by a DTA-TGA analysis. Based on the weight loss, a fugitive amount of a functional organic compound from the molded article was determined. In parallel, the residual concentration of the compound was measured by a GC-2010 (manufactured by Shimadzu Corporation) in accordance with a trichlorobenzene hot extraction method.

### (2) Observation of emulsion

The surface to be observed was treated with ruthenium tetrachloride to stain an aromatic ring part, and the treated surface was observed by a scanning electron microscope (SEM).

### Example 1

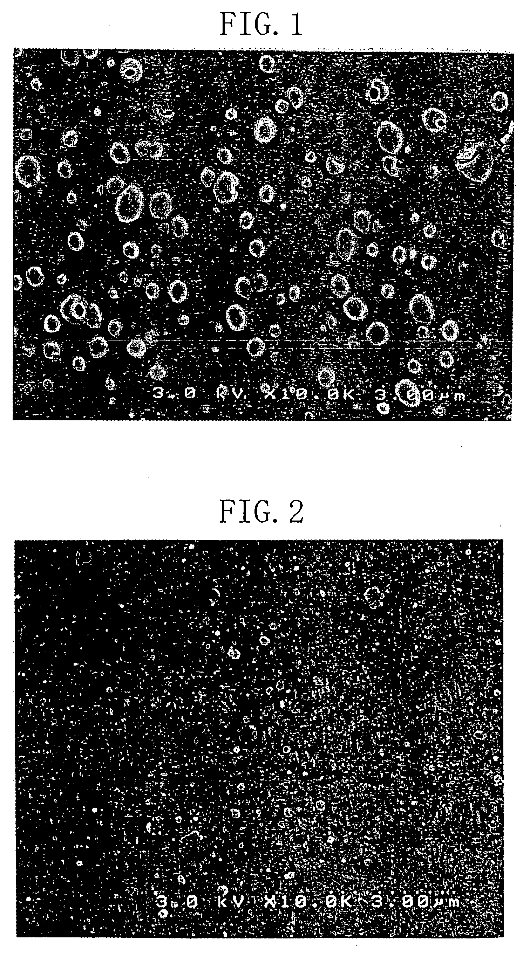

The raw materials of the ratio as 85 kg of a polypropylene ("Y6005GM" manufactured by Prime Polymer Co., Ltd.) as a matrix polymer (A) and 10 kg of a SEP ("SEP1001" manufactured by Kuraray Co., Ltd.) as a block copolymer (B) were supplied to a conventional biaxial extruder, and a liquid compound (C) of 5 kg of 1,3-diphenylpropane in the phase of a liquid at a room temperature was supplied thereto by a plunger (or ram) pump. The mixture was extruded from the die head at 190°C, and the extruded gut was quenched in water and cut with a cutter to give granular master batch pellets (D) of the present invention. The DTA-TGA measurement result of the pellets revealed that 1,3-diphenylpropane enough remained with a residual amount of 4.57%. The master batch was put in a hot air dryer at 80°C, and the weight loss was measured and recorded at the put point in time, after 3 days, 7 days, 14 days and 30 days. The weight loss of 1,3-diphenylpropane remained at 72% even after 30 days, and a good retention of the functional liquidwas shown. As an evaluation criterion of an anti-mite efficacy of a carpet, Interior-fabrics Performance Evaluation Conference is decided that a facilitation test result under 81°C for 3 days corresponds to a test result under an atmospheric temperature for 3 years. As also apparent from such a evaluation criterion, it is apparent that the master batch is excellent in a long-term sustentation of efficacy. Fig. 1 is a SEM observation image. The image shows a sea-island structure having a particle size smaller than 1 µm and reveals that the inside of the island is hollow as seen in a partly broken island. The cavity is a trace caused by vaporization of a liquid 1,3-diphenylpropane from the inside of the island ruptured by SEM observation in vacuo, and clearly indicates that a liquid-in-solid polymer emulsion was formed.

### Example 2

In the same manner as Example 1, the raw materials of the ratio as 85 kg of a LDPE polymer ("NOVATEC LL" manufactured by Japan Polyethylene Corporation) as a matrix polymer (A) and 10 kg of a SEP ("SEPS2002" manufactured by Kuraray Co. , Ltd.) as a block copolymer (B) were supplied to a conventional twin extruder, and 5 kg of a Cedarwood oil having antibacterial, antifungal and insect-proofing functions as a liquid compound (C) were supplied thereto by a plunger pump. The mixture was extruded from the die head at 160°C, and the extruded gut was quenched in water and cut with a cutter to give granular master batch pellets of the present invention. The DTA-TGA measurement result of the chip revealed that the Cedarwood oil enough remained with a residual amount of 4.62%. The master batch was put in a dryer at 80°C, and the weight loss was measured and recorded at the put point in time, and after 7 days. The weight loss of the Cedarwood oil remained at 46% even after 7 days, and good retention of the functional liquid was shown. Fig. 2 is a SEM observation image, and reveals that finer sea-island structure was observed compared with Fig. 1. The image reveals that the inside of the island is hollow as seen in a partly broken island. From a comparison with Example 1, it is determined that the structure of the liquid-in-solid polymer emulsion is dependent on the matrix polymer (A), the block copolymer (B) and the liquid compound (C).

### Example 3

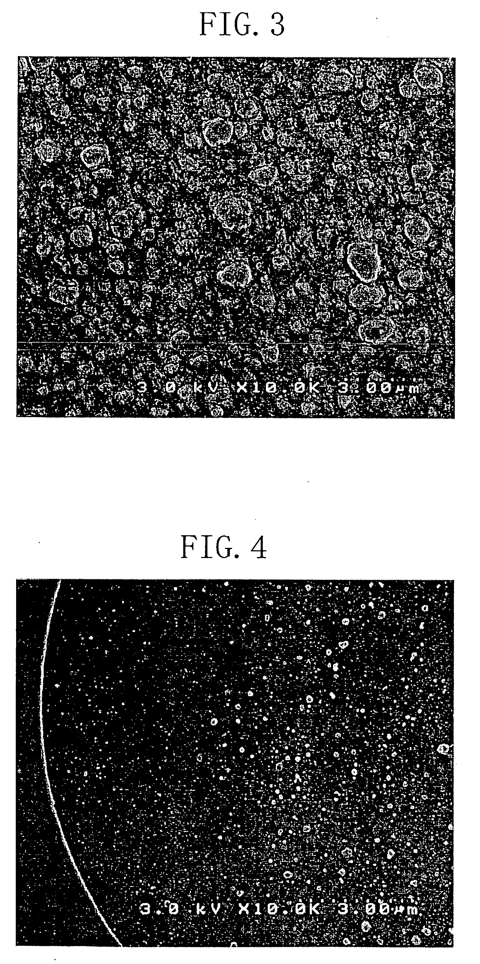

In the same manner as Example 2, the raw materials of the ratio as 85 kg of a LDPE polymer ("NOVATEC LL" manufactured by Japan Polyethylene Corporation) as a matrix polymer (A) and 15 kg of a SEPS ("SEPS2002" manufactured by Kuraray Co. , Ltd.) as a block copolymer (B) were supplied to a conventional twin extruder, and 5 kg of a Peppermint oil instead of the Cedarwood oil as a liquid compound (C) were supplied thereto by a plunger pump. The mixture was extruded from the die head at 160°C, and picked up in a rope form. The picked up matter was rapidly cooled in water and the extruded gut was quenched in water and cut with a cutter to give granular master batch pellets of the present invention. The DTA-TGA measurement result of the Peppermint oil revealed that the Peppermint oil almost lost the weight at 156°C. The DTA-TGA measurement result of the pellets revealed that the Peppermint oil enough remained with a residual amount of 4.42%, although the temperature of the die head was higher than the vaporization temperature. The master batch was put in a dryer at 80°C, and the weight less was measured and recorded at the put point in time, and after 7 days. The weight loss of the Peppermint oil remained at 53% even after 7 days, and good retention of the functional liquid was shown. Fig. 3 is a SEM observation image, and reveals that larger sea-island structure was observed compared with Fig. 2. The image reveals that the inside of the island is hollow as seen in a partly broken island. It is determined that the structure of the liquid-in-solid polymer emulsion depends on the liquid compound (C) even in the case where the same matrix polymer (A) and block copolymer (B) are used.

### Example 4

In the same manner as Example 2, the raw materials of the ratio as 85 kg of a LLDPE ("NOVATEC LL" manufactured by Japan Polyethylene Corporation) as a matrix polymer (A) and 15 kg of a SEPS ("SEPS2002" manufactured by Kuraray Co., Ltd.) as a block copolymer (B) were supplied to a conventional twin extruder, and 5 kg of an Eucalyptus oil instead of the Cedarwood oil as a liquid compound (C) were supplied thereto by a plunger pump. The mixture was extruded from the die head at 160°C, and the extruded gut was quenched in water and cut with a cutter to give granular master batch pellets of the present invention. The TGA-DTA measurement result of the pellets revealed that the residual amount of the Eucalyptus oil was 4.49%. The DTA-TGA measurement result of the chip revealed that the Eucalyptus oil enough remained with a residual amount of 4.58%.

### Comparative Example 1

In the same manner as Example 1 except for not supplying the block copolymer (B) and supplying 100 kg of a polypropylene ("Y6005GM" manufactured by Prime Polymer Co., Ltd.) to a conventional twin extruder, 5 kg of 1,3-diphenylpropane were supplied thereto by a plunger pump. The mixture was extruded from the die head, and the extruded gut was quenched in water and cut with a cutter to give granular master batch pellets for comparison. However, the phase-separated oil was spurted out from the die, and as a result, the surfaces of the pellets were coated with the large amount of bleeding 1,3-diphenylpropane. Therefore, the chips were cohesive each other, and were not used for the next step.

### Example 5

In the same manner as Example 2, the raw materials of the ratio as 85 kg of a LLDPE ("NOVATEC LL UR951" manufactured by Japan Polyethylene Corporation) as a matrix polymer (A) and 15 kg of a SEPS ("SEPS2002" manufactured by Kuraray Co., Ltd.) as a block copolymer (B) were supplied to a conventional biaxial extruder, and a liquid compound (C) of 5 kg of a insecticide Permethrin was supplied thereto by a plunger pump. The mixture was extruded from the die head at 160°C, and the extruded gut was quenched in water and cut with a cutter to give granular master batch pellets of the present invention. The GC measurement result of the pellets revealed that the Permethrin enough remained with a residual amount of 4.68%.

### Example 6

The master batch of the present invention produced in Example 5 (10 parts by weight) and PP pellets (90 parts by weight) were mixed, and melt spun by a spin-draw process at a spinning temperature of 230°C to produce a PP multi-filaments (110 dTex /24F) of the present invention. The GC measurement result of the filaments revealed that the Permethrin enough remained with a residual amount of 0.37% while the thermal history was undergone twice. Moreover, the filaments showed excellent mechanical properties that the tensile strength thereof was 4.2g/dTex and the tensile elongation thereof was 70%. The filaments were knitted to give a tricot mosquito net fabric of the present invention. The fabric had an excellent knockdown efficacy that a 50% knockdown time of mosquito_(Coulex pipiens pallens) was 16 minutes based on a WHO kit method. Fig. 4 is a cross-sectional SEM observation image of a multi-filament of the present invention. In the image, a fine sea-island structure was observed, and it was confirmed that the structure of the liquid-in-solid polymer emulsion was formed again after the secondary melt spinning.

### Example 7

The master batch of the present invention produced in Example 2 (10 parts by weight) and PP pellets (90 parts by weight) were mixed, and melt spun by a conventional method to produce PP BCF multi-filaments (1650 Dtex/96F) of the present invention. The GC measurement result of the filaments revealed that the Cedarwood oil enough remained with a residual amount of 0.36% while the thermal history was undergone twice. A backing material was baked on the BCF multi-filaments to give a loop pile tufted carpet comprising the BCF multi-filaments which underwent third time thermal history and having a weight of 1 kg/m². The carpet showed such a good repellent efficacy on a mite that the repellent ratio of Dermatophagoides farinae was 86%.

### Example 8

The master batch of the present invention produced in Example 3 (20 parts by weight) and HDPE pellets (80 parts by weight) were mixed to give a film at a die temperature of 190°C by a T-die method based on a conventional method. The film was slit to produce a tape yarn (1450 dTex) of the present invention. The GC measurement result of the tape yarn revealed that the Peppermint oil enough remained with a residual amount of 0.36%. The tape yarn of the present invention and a regular HDPE tape yarn were used as a warp and a warp, respectively, to give a plane circular-woven hessian fabric. A rat food was wrapped in the hessian and placed in a bleeding cage of rat. Five of 17-week-old Rattus norvegicus caraco were put in the each five cage and were allowed to stand for three days and nights, and the existence of feeding was observed. After one day, no rat fed, and after two days, only two rats fed. Thus, the hessian showed an excellent anti-rodent efficiency. On the other hand, three rats fed on a blank placed in the same cage after one day. After two days, all rats fed on the blank.

### Example 9

The master batch of the present invention produced in Example 1 (10 parts by weight) and a polypropylene ("Y6005GM" manufactured by Prime Polymer Co., Ltd.) (10 parts by weight) were mixed to give a meltblown nonwoven fabric filter having a weight of 22 g/cm² of the present invention by a meltblown method based on a conventional method. As a result of a quartz dust collection efficiency test of the obtained nonwoven fabric (conditions of quartz dust collection test: quartz dust having a particle size of 1.0 µm, a wind velocity of 8.6 cm per second), it was confirmed that the dust collection efficiency of the obtained nonwoven fabric was about twice as high as that of a common meltblown nonwoven fabric at the same level of a pressure drop (about 16 Pa).

### Example 10

The raw materials of the ratio as 85 kg of a polystyrene ("GPPS679" manufactured by PS Japan Corporation) as a matrix polymer (A) and 10 kg of a SEP ("SEP2014" manufactured by Kuraray Co., Ltd.) as a block copolymer (B) were supplied to a conventional twin extruder, and 5 kg of a polyoxyethylene stearylamine which was an antistatic agent as a liquid compound (C) were supplied thereto by a plunger pump. The mixture was extruded from the die head at 190°C, and the extruded gut was quenched in water and cut with a cutter to give granular master batch pellets of the present invention. The DTA-TGA measurement result of the pellets revealed that the polyoxyethylene stearylamine enough remained with a residual amount of 4.67%. The master batch was ten-fold diluted with a LDPE (E), and was subjected to a conventional method to give an inflation film of the present invention. The measurement result of surface resistance in the film was 1.2 x 10¹¹ Ω by the JIS K 6911 method under an applied voltage of 500 V at 20°C and 40% RH. The film showed enough properties for an anti-static efficacy of dust adhesion compared with a blank (2.5 x 10¹⁵ Ω).

### Example 11

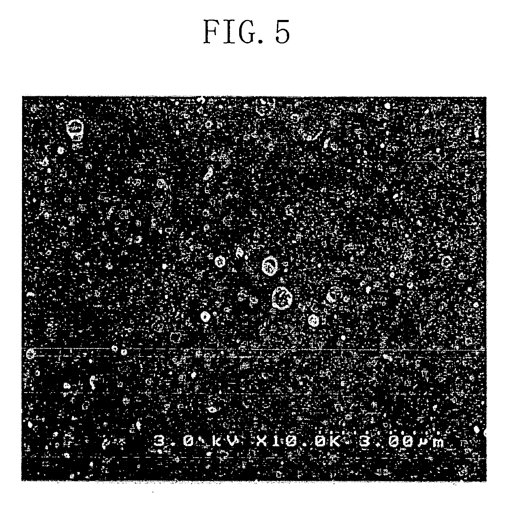

The raw materials of the ratio as the master batch (D) of the present invention produced in Example 2 (40 parts by weight), a polyvinyl chloride powder having a molecular weight of about 2000 (30 parts by weight) and 1,2-di-2-ethylhexyl phthalate (E) (hereinafter, referred to as "DOP") as a plasticizer (30 parts by weight) were supplied at 140°C to a twin extruder. The extruded gut was quenched in water and cut with a cutter to give a soft polyvinyl chloride granular master batch pellets (F) of the present invention, containing a polyblended LDPE polymer composition. The surfaces of the pellets were easily recognizable as dried touch, and the bleeding out of the Cedarwood oil was not recognized in appearance. Moreover, the Cedarwood oil enough remained with a residual amount of 1.83% by weight in the master batch of the present invention. Fig. 5 is a cross-sectional SEM observation image of the master batch of the present invention. In the image, a fine sea-island structure was observed, and it was confirmed that the structure of the liquid-in-solid polymer emulsion was formed again to be a double structure after melt spinning again although a large amount of the DOP having a high compatibility with the Cedarwood oil was contained in the matrix polymer (E).

### Example 12

The master batch of the present invention produced in Example 11 was four-fold diluted with an equal mixture of a polyvinyl chloride and a plasticizer DOP to give an inflation film, having a thickness of 60 µm and a width of 2 m, of the present invention by an inflation film method based on a conventional method. The surface of the film was easily recognizable as dried touch, and the bleeding out of the Cedarwood oil was not recognized in appearance. In the film, the Cedarwood oil enough remained with a residual amount of 0.37% by weight.

### Example 13

The master batch of the present invention produced in Example 2 (10 parts by weight) and dried PET pellets having an IV value of 0.70 (90 parts by weight) were mixed. The mixture was melt-mixed by an extruder equipped with a mixer, weighed by a gear pump, and spun by a spin-draw method at a dice temperature of 270°C to produce multi-filaments (165 dTex/48F) of the present invention. In the filaments, the Cedarwood oil enough remained with a residual amount of 0.41% by weight. The filaments were dyed in black by a high-pressure dyeing method based on a conventional manner. The resulting matter was subjected to an antibacterial test on the basis of JIS L1902 absorption method. As a result, the filaments showed such an excellent antibacterial efficacy as a bacteriostatic value of 2.8 on Staphylococcus aureus.

### Example 14

The raw materials of the ratio of the master batch (20 kg) of the present invention produced in Example 2, a LDPE (80 kg) containing 50% by weight of titanium oxide, and an adequate amount of an appropriate additive were added by a conventional method, and supplied to a twin extruder. The extruded gut was quenched in water and cut with a cutter to give a granular master batch pellets. The pellets were pulverized while cooling with liquid nitrogen, and a white powdered paint of the present invention was produced which had a mean particle size of 63 micrometers. The GC measurement result of the powdered paint revealed that the Cedarwood oil enough remained with a residual amount of 1.09%. The powdered paint was adhered to a clean pre-treated with zinc phosphate iron plate having a thickness of 2 mm and a dimension of 10 x 20 cm by an electrostatic spraying method, and heated to 200°C for 10 minutes to form a paint film (or coat film) having a thickness of 30 µ. The paint film adhered firmly to the iron plate, and has a coated strength enough for practical purpose. The iron plate was subjected to a fungus resistance test in accordance with JIS Z2911 2000 wet process using mixed four types of fungi, and as a result, no growth of the bacterial mycellium was recognized in an area inoculated with the fungi even after two weeks.

### Example 15

The powdered paint (10% by weight) of the present invention produced in Example 14 was mixed to a commercially available water base paint (a general-purpose aqueous EG manufactured by Kansai Paint Co., Ltd.) by a mixer. The viscosity of the mixture was adjusted with water, and a liquid paint of the present invention was prepared. The paint was coated on a piece of wood at a coating thickness of 100 gr/m² and dried. The coated piece was subjected to a fungus resistance test in accordance with JIS Z2911 2000 wet process using mixed four types of fungi, and as a result, no growth of the mycellium was recognized in an area inoculated with the fungi even after two weeks.

### Example 16

The raw materials of the ratio as 85 kg of a LDPE ("NOVATEC LL" manufactured by Japan Polyethylene Corporation) as a matrix polymer (A) and 10 kg of a cation block copolymer of a polybutene (70wt%) and a polymaleic anhydride (30wt%) having a MFR (melt flow rate) of 23 as a block copolymer (B) were supplied to a conventional twin extruder, and 1 kg of 0.1wt% copper sulfate aqueous solution as a liquid compound (C) was supplied thereto by a plunger pump. The mixture was extruded from the die head at 140°C, and cut with an underwater cutter to produce granular molding pellets of the present invention. The DTA-TGA measurement result of the chip revealed that the water enough remained with a residual amount of 0.89%.

### Example 17

In the same manner as Example 16 except for using 3wt% phenol aqueous solution instead of 0.1wt% copper sulfate aqueous solution, molding pellets of the present invention was produced. The DTA-TGA measurement result of the pellets revealed that the water enough remained with a residual amount of 0.89%. An inflation film having a thickness of 50 µm was produced by a conventional method. The film was subjected to a fungus resistance test in accordance with JIS Z2911 2000 wet process using mixed four types of fungi, and as a result, no growth of the mycellium was recognized in an area inoculated with the fungi even after two weeks.

### BRIEF DESCRIPTION OF THE DRAWINGS

Fig. 1 is a scanning electron microphotograph of a dispersed state in a master batch of Example 1 according to the present invention.
Fig. 2 is a scanning electron microphotograph of a dispersed state in a master batch of Example 2 according to the present invention.
Fig. 3 is a scanning electron microphotograph of a dispersed state in a master batch of Example 3 according to the present invention.
Fig. 4 is a scanning electron microphotograph of a cross section of a multi-filament of Example 4 according to the present invention.
Fig. 5 is a scanning electron microphotograph of a dispersed state in a master batch of Example 5 according to the present invention.

## Claims

1. A composition (D) which is forming of a liquid-in-solid polymer emulsion at an atmospheric temperature, and comprises
(A) a thermoplastic polymer,
(B) a block copolymer comprising (B1) a block and (B2) a block, and
(C) a liquid compound,
wherein the block (B1) has a high compatibility with the polymer (A) and a low compatibility with the compound (C), the block (B2) has a high compatibility with the compound (C) and a low compatibility with the polymer (A), and the block copolymer (B) is phase-separated from the polymer (A),
the amount of the block copolymer (B) is 0.1 to 50 parts by weight relative to 100 parts by weight of the polymer (A),
the liquid compound (C) has a low compatibility with each of the block (B1) and the polymer (A), and a high compatibility with the block (B2), is phase-separated from the polymer (A), and is in a liquid phase at a temperature not higher than 100°C,
the liquid compound (C) is dispersed and mixed in an amount of 0.1 to 20 parts by weight relative to 100 parts by weight of the total amount of the polymer (A) and the block copolymer (B), and
the copolymer (B) has an interface action as a surfactant and encloses the liquid compound (C).

2. A composition (F) according to claim 1, which comprises:
a polymer blend in which the composition (D) recited in claim 1 forming of a liquid-in-solid polymer emulsion is further dispersed in a polymer composition (E) comprising a polymer other than the polymer (A), or a blend of a plasticizer and a polymer other than the polymer (A),
a polymer solution of the composition (D), or
a blend of a polymer and a plasticizer.

3. A composition (G) according to claim 1 or 2, wherein said polymer other than the polymer (A) recited in claim 2 comprises a thermoplastic polymer, or/and a thermosetting polymer precursor or thermosetting polymer, or said polymer composition (E) recited in claim 2 comprises a composition comprising a blended matter of a plasticizer, and a thermoplastic polymer, or/and a thermosetting polymer precursor or thermosetting polymer.

4. A composition according to any one of claims 1 to 3, wherein the liquid compound (C), in a liquid phase at a temperature not higher than 100°C, recited in claim 1 comprises an organic compound, or a solution of an organic compound, or an aqueous solution.
((D4) comprising (D) or (F) or (G)).

5. A composition according to any one of claims 1 to 4, wherein the thermoplastic polymer (A) recited in claim 1 comprises a polyolefin-series polymer, and
the block copolymer (B) comprises at least one member selected from the group consisting of
a poly(ethylene/propylene) (B1)-polystyrene (B2) block copolymer(SEP)in which the poly(ethylene/propylene) (B1) comprises a block having a high compatibility with the polymer (A) and the polystyrene (B2) comprises a block having a high compatibility with the liquid compound (C),
a polystyrene (B2)-poly(ethylene/butylene) (B1) block copolymer (SEB),
a polystyrene (B2)-poly(ethylene/propylene) (B1)-polystyrene (B2) block copolymer (SEPS),
a polystyrene (B2)-poly(ethylene/butylene) (B1)-polystyrene (B2) block copolymer (SEBS), and
a polystyrene (B2)-poly(ethylene-ethylene/propylene) (B1)-polystyrene (B2) block copolymer (SEEPS).
((D5) comprising (D) or (F) or (G)).

6. A composition according to claim 5, wherein the liquid compound (C) comprises an organic compound or solution which has an aromatic ring, an alicyclic skeleton or a polar group having a higher compatibility with a polystyrene than a compatibility with a polyolefin.
((D6) comprising (D5)).

7. A composition according to any one of claims 1 to 4, wherein the thermoplastic polymer (A) recited in claim 1 comprises a polystyrene-series polymer, and
the block copolymer (B) comprises at least one member selected from the group consisting of
a poly(ethylene/propylene) (B1)-polystyrene (B1) block copolymer (SEP) in which the poly(ethylene/propylene) (B1) comprises a block having a high compatibility with the polymer (A) and the polystyrene (B1) comprises a block having a high compatibility with the liquid compound (C),
a polystyrene (B1)-poly(ethylene/butylene) (B1) block copolymer (SEB),
a polystyrene (B1)-poly(ethylene/propylene) (B1)-polystyrene (B1) block copolymer (SEPS),
a polystyrene (B1)-poly(ethylene/butylene) (B1)-polystyrene (B1) block copolymer (SEBS), and
a polystyrene (B1)-poly(ethylene-ethylene/propylene) (B1)-polystyrene (B1) block copolymer (SEEPS).
((D7) comprising (D) or (F) or (G)).

8. A composition according to claim 7 , wherein the liquid compound (C) comprises an organic compound or solution, and the organic compound or solution has a higher compatibility with a polyolefin than a compatibility with a polystyrene, is phase-separated from the polystyrene, and contains an alkyl or alkenyl-containing compound, an ester or ether or polyether amine or an alcohol containing an alkyl or alkenyl group.
((D8) comprising (D7)).

9. A composition (D9) according to anyone of claims 1 to 4, wherein the block copolymer (B) comprises a hydrophilic block copolymer, the block (B1) comprises a hydrophobic polyvinyl compound,and the block(B2)comprises a vinyl polymer of a dicarboxylic anhydride such as maleic anhydride, fumaric anhydride or itaconic anhydride, or/and a polyol such as a polyethylene glycol or a polypropylene glycol.

10. A composition (D10) according to any one of claims 1 to 9, wherein the liquid compound (C) comprises at least one member selected from the group consisting of a pharmaceutical product, an antibacterial agent, an antifungal agent, an antiviral agent, an antielectrostatic agent, an antialgal agent, a preservative, an aromatic agent, an anti-insect agent, an insecticide, an anti-rodent agent, an anti-bird agent, an anti-animal agent, an attractant, a pesticide, an anti-fouling agent, a flame retardant, a dust-capturing agent, a fertilizer and a deodorant agent.

11. A molded article formed from a composition recited in any one of claims 1 to 10, or a diluted matter thereof, wherein the molded article has a thin film on a surface thereof, and the thin film is formed from a liquid bled out from an inside thereof and has a thickness of not more than 1 µm and is in the phase of a liquid at a temperature not higher than 100°C.

12. A molded article according to claim 11, which is an extrusion-molded article.

13. A molded article according to claim 12, which is a fiber, a fabric or product made from the fiber, and a laminated product comprising the fabric or product.

14. A molded article according to claim 13, which is a coating material, a covering material, a pipe, a sheet, a film, and a laminated product.

15. A molded article according to claim 11, which is an injection- or rotational-molded article, or a blow-molded article.

16. A paint comprising a composition recited in any one of claims 1 to 10, or a mixture or diluted matter thereof.

17. A filter comprising a fabric or product made from the fiber and laminated product recited in claim 13 as a main dust-capturing material.
